# EUROPÄISCHE PATENTANMELDUNG

(11) **EP 1 052 056 A2**
(43) Veröffentlichungstag der Anmeldung: **15.11.2000**
(21) Anmeldenummer: 00810372.3
(22) Anmeldetag: 02.05.2000
(51) Int. Cl.: B23Q 1/54, B24B 3/00, B24B 41/00

(54) **Werkzeugschleifmachine**

(30) Priorität: 04.05.1999 CH 82699
(71) Anmelder: Schneeberger, Jürg, 4900 Langenthal (CH)
(72) Erfinder: Schneeberger, Jürg, 4900 Langenthal (CH)
(74) Vertreter: Roshardt, Werner Alfred, Dipl.-Phys.

(57) **Zusammenfassung**

Eine Werkzeugschleifmaschine, insbesondere eine 5-Achsen-CNC-Werkzeugschleifmaschine hat eine um eine Schwenkachse **(13)** verschwenkbare wenigstens eine Schleifscheibe **(19a, 19b, 21a, 21b)** zum Schleifen eines Werkzeugs tragende Schleifspindel **(17)**. Ferner ist eine weitere zweite Schwenkachse **(9)**, um die eine erste Schwenkachse **(13)** verschwenkbar ist, vorhanden, wobei erste und zweite Schwenkachse **(13, 9)** immer in einer wesentlich von der Vertikalen abweichenden Lage liegen. Infolge dieser beiden Schwenkachsen ist ein bei den bekannten Maschinen auftretender Winkel-Positionsfehler minimierbar. Zudem ist bei vorgegebenen Werkzeugdimensionen gegenüber den bekannten Werkzeugschleifmaschinen eine kompaktere Schleifmaschine konstruierbar.

## Beschreibung

### Technisches Gebiet

Die Erfindung betrifft eine Werkzeugschleifmaschine, insbesondere eine 5-Achsen-CNC-Werkzeugschleifmaschine.

### Stand der Technik

Werkzeugschleifmaschinen sind beispielsweise aus der DE-A 42 42 906, der DE-A 35 32 903, der EP-A 0 072 887 der DE-A 196 26 204 und der US-A 4 115 956 bekannt. Diese bekannten Werkzeugschleifmaschinen hatten eine Werkzeughalterung, welche in der Regel als X-Y-Tisch ausgebildet war, der auch um eine Achse drehbar sein konnte. Die Schleifspindel war in den oben zitierten Druckschriften bis auf die DE-A 42 42 906 horizontal angeordnet. Sie konnte in der DE-A 196 26 204 in allen drei Koordinatenrichtungen verschoben sowie zusätzlich um eine vertikale Achse geschwenkt werden. Aus der US-A 4 115 956 war eine Spindelanordnung bekannt, bei der eine Schleifspindelschwenkung um eine vertikale und zusätzlich um eine horizontale Achse möglich war sowie zusätzlich eine lineare Verstellung in den drei Koordinatenrichtungen x, y, und z.

### Aufgabe der Erfindung

Aufgabe der Erfindung ist es, eine Werkzeugschleifmaschine mit einer Schleifscheibenanordnung zu schaffen, bei der Winkel-Positionsfehler minimierbar sind und bei vorgegebenen Werkzeugdimensionen gegenüber den bekannten Werkzeugschleifmaschinen eine kompaktere Schleifmaschine sich ergibt.

### Lösung der Aufgabe

Die obengenannte Aufgabe wird dadurch gelöst, daß die wenigstens eine Schleifscheibe tragende Spindelachse mittels zweier Schwenkachsen verschwenkbar angeordnet ist. Diese beiden Schwenkachsen sind aber nicht, wie in der US-A 4,115 956, als eine horizontale und eine vertikale Schwenkachse ausgebildet, sondern als zwei Schwenkachsen, welche beide eine wesentlich von der Vertikalen abweichende Lage haben. Erst hierdurch kann ein Schleifen von Werkzeugen mit minimalen Winkel-Positionsfehler durchgeführt werden. Die nachfolgend beschriebene Konstruktion einer Werkzeugschleifmaschine zeigt gegenüber den bekannten Werkzeugschleifmaschinen trotz der relativ großen Länge der Antriebsspindel einen kompakten und raumsparenden Aufbau bezogen auf eine vorgegebene Werkzeugdimension.

Außerden gestattet eine derartige Schleifmaschinenausführung in einer bevorzugten Ausführungsform eine unten beschriebene äußerst einfache Zuführung einer Kühlmittelverrohrung. Auch kann mit einer vorteilhaften Anordnung einer Trennwand der nasse, staubige Schleifraum von der für den Betrieb notwendigen Verkabelung separiert werden.

### Kurze Beschreibung der Zeichnungen

Im folgenden werden Beispiele der erfindungsgemäßen Werkzeugschleifmaschine anhand der Zeichnungen näher erläutert. Es zeigen:
- Fig. 1: eine schematische Seitenansicht der erfindungsgemäßen Werkzeugschleifmaschine mit zwei horizontal verlaufenden Schwenkachsen, wobei die eine Schwenkachse derart verschwenkt dargestellt ist, daß beide Schwenkachsen in einer vertikalen Ebene liegen;
- Fig. 2: eine stirnseitige Ansicht der in **Figur 1** dargestellten Werkzeugschleifmaschine und
- Fig. 3: eine vergrößerte Darstellung eines Schleifspindelantriebs in einer in **Figur 2** gezeigten Blickrichtung III der in den **Figuren 1** und **2** dargestellten Werkzeugschleifmaschine.

### Wege zur Ausführung der Erfindung

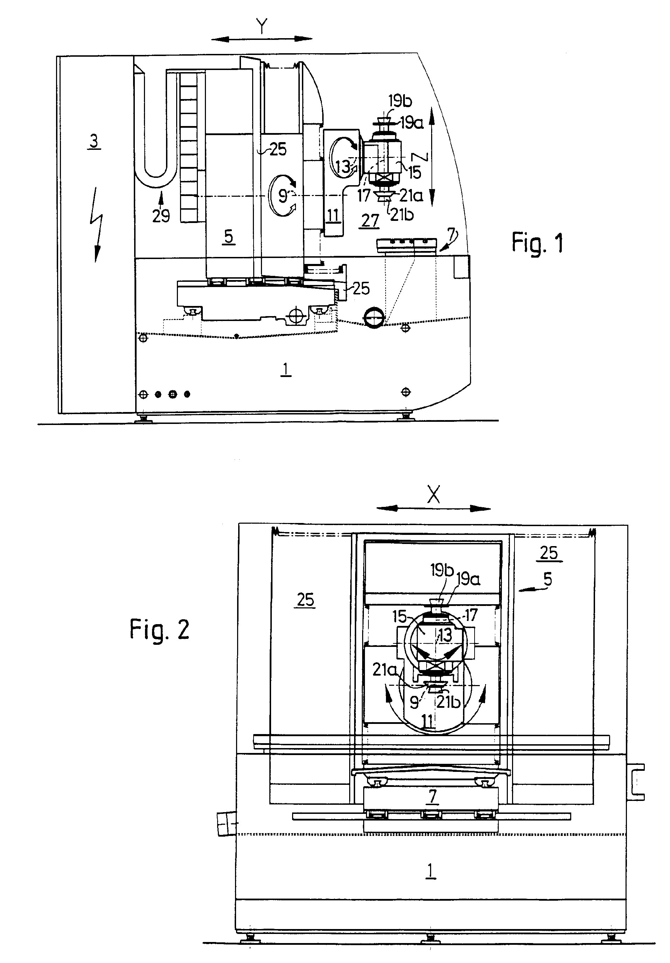

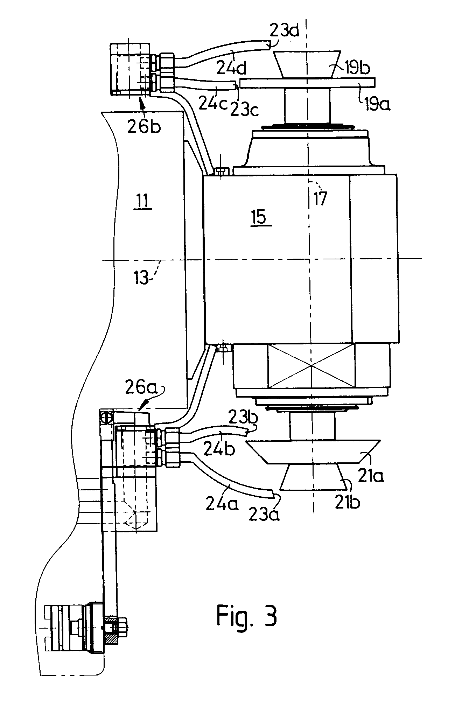

Die in den **Figuren 1** und **3** dargestellte erfindungsgemäße Werkzeugschleifmaschine hat ein Maschinengestell **1**, eine CNC-Steuerung **3**, einen Maschinenständer **5** und einen Maschinentisch **7**. Der Maschinenständer **5** ist in den beiden horizontalen Richtungen **x** uns **y** mittels (nicht dargestellter) Elektromotore durch elektrische Signale der CNC-Steuerung **3** verfahrbar. Eine am Maschinenständer **5** angeordnete horizontale Schwenkachse **9** ist ebenfalls gesteuert von der CNC-Steuerung **3** in vertikaler Richtung verfahrbar (Höhenverstellung). An dieser Schwenkachse **9** ist eine Halteeinrichtung **11** fixiert und somit mit der Schwenkachse **9** verschwenkbar. Die Halteeinrichtung **11** trägt zur Fixierung mit der Schwenkachse **9** seitlich versetzt, eine weitere horizontal verlaufende Schwenkachse **13**. Die Schwenkachse **13** ist hier durch einen (nicht in den Figuren sichtbaren) hydraulischen Schwenkantrieb verschwenkbar. Die beiden Schwenkachsen **9** und **13** verlaufen parallel zueinander in horizontaler Lage. Auf der Schwenkachse **13** sitzt ein Antrieb **15** mit einer zur Schwenkachse **13** senkrecht verlaufenden Schleifspindel (Antriebsachse) **17**. An den Antriebsachsenendbereichen ist wenigstens eine Schleifscheibe, hier jeweils zwei Schleifscheiben **19a** und **19b** sowie **21a** und **21b** abnehmbar angeschraubt. Eine (optische) Verlängerung der Achse der Schwenkachse **13** hat einen Schnittpunkt mit der Spindelachse **17**. In **Figur 2** ist dies der mit der Bezugszeichenzahl **13** für die Schwenkachse **13** gekennzeichnete Ort. Der Befestigungsort der Schleifscheiben **19a, 19b, 21a** und **21b** an der Schleifspindel **17** ist derart gewählt, daß der Abstand von Punkt **13** gleich dem Abstand der beiden Schwenkachsen **9** und **13** voneinander ist. Nur durch eine derartige Anordnung ist die unten beschriebene Minimierung von Winkelfehlern bei der Bearbeitung möglich.

Jeder Schleifscheibe **19a, 19b, 21a** und **21b** ist je ein Kühlmittelauslaß **23a** bis **23b** zugeordnet. Die zu den Kühlmittelauslässen gehörenden Kühlmittelrohre **24a** bis **24d** sind an Halteelementen **26a** bzw. **26b** gehalten, welche ebenfalls an der Schwenkachse **13** bzw. an der Halteeinrichtung **11** gehalten sind; also mit der Antriebsachse **17** zusammen verschwenkt werden. Die Kühlmittelauslässe **23a** bis **23d** haben somit bei einem Verschwenken der Antriebsachse **17** bzw. der Schleifscheiben **19a, 19b, 21a** bzw. **21b** immer die richtige Position zu diesen. Da immer nur eine Schleifscheibe **19a**, **19b, 21a** bzw. **21b** im Schleifeinsatz ist, sind die entsprechenden Kühlmittelrohre **24a** bis **24d** mit nicht dargestellten Ventilen ansteuerbar.

Am Maschinenständer **5** ist ferner eine Trennwand **25** angeordnet, welche den nassen und staubigen Schleifraum **27** gegenüber dem restlichen Maschinenraum, insbesondere gegen die von der CNC-Steuerung **3** kommende Verkabelung **29**, separiert.

Die Schwenkachse **13** ist hier als hydraulische Achse ausgebildet, welche jeweils zwischen zwei Positionen bevorzugt um +/- 180° umschaltbar ist. Statt eines hydraulischen Antriebs kann auch ein pneumatischer verwendet werden oder eine gezielte winkelmäßige Steuerung durch die CNC-Steuerung 3 vorzugsweise mit einem elektromotirischen Antrieb erfolgen.

Durch die beiden zueinander parallelen, horizontal liegenden Achsen **9** und **13** kann die jeweilige Schleifscheibe **19a, 19b, 21a** bzw. **21b** in eine für das Schleifen günstige Lage nahe der Rotationsachse **9** gebracht werden. Hierdurch werden gegenüber den bekannten Schleifmaschinen genauere Schleifresultate erzielt. Die Positions-Abweichungen der Schleifscheibe aufgrund der - bei Schwenkachsen unvermeidlichen - Winkelfehler werden hierdurch minimiert. Bearbeitungen, die eine kontinuierliche Schwenkung der Achse **9** bedingen (z.B. eine konstante Orientierung einer der Schleifscheiben **19a, 19b, 21a** oder **21b** zu einer gekrümmten Fläche ) sind sehr exakt möglich, da die Linearachsen **x** und **z** nur kleine Kompensationsbewegungen ausführen müssen.

Positionsabweichungen von einer vorgegebenen Schleifposition aufgrund von Winkelfehlern nehmen linear mit deren Abstand von der Schwenkachse zu. Mit der oben beschriebenen Ausbildung einer zur Schwenkachse **9** zusätzlichen Schwenkachse **13** kann nun immer möglichst im Drehzentrum der Schwenkachse **9** gearbeitet werden, wodurch ein Winkelfehler stark reduziert wird. Ein Abstand von Drehzentrum der Schwenkachse **9** ergibt sich lediglich durch die Scheifscheibendimensionen.

Anstatt die beiden Schwenkachsen parallel zueinander anzuordnen, können sie auch je nach Anwendungszweck in einem Winkel zueinander angeordnet werden. Sie müssen auch nicht unbedingt horizontal angeordnet werden; es kann auch eine Neigung gegen die Horizontale vorgesehen werden. Eine vertikale Anordnung sollte jedoch vermieden werden, da dann die Ausbildung der gesamten Schleifmaschine nicht mehr in der hier gezeigten kompakten Art herstellbar ist. Bei einer vertikalen Schwenkachsenanordnung würde nämlich der Antrieb **15** weiter vom Maschinenständer **5** entfernt zu liegen kommen; d.h. der Schleifraum **27** wäre nach vorn vergrößert.

## Patentansprüche

1. Werkzeugschleifmaschine, insbesondere 5-Achsen-CNC-Werkzeugschleifmaschine mit einer um eine Schwenkachse **(13)** verschwenkbaren wenigstens eine Schleifscheibe **(19a, 19b, 21a, 21b)** zum Schleifen eines Werkzeugs tragende Schleifspindel **(17)**, gekennzeichnet durch eine weitere zweite Schwenkachse **(9)**, um die eine erste Schwenkachse **(13)** verschwenkbar angeordnet ist, wobei erste und zweite Schwenkachse **(13, 9)** immer in einer wesentlich von der Vertikalen abweichenden Lage liegen.

2. Werkzeugschleifmaschine nach Anspruch 1, **dadurch gekennzeichnet**, daß die erste Schwenkachse **(13)** an einer an der zweiten Schwenkachse **(9)** angeordneten Halteeinrichtung **(11)** gegenüber der zweiten Schwenkachse **(9)** versetzt angeordnet ist und bevorzugt eine der beiden Schwenkachsen **(9, 13)** eine horizontale Lage hat.

3. Werkzeugschleifmaschine nach Anspruch 1 oder 2, **dadurch gekennzeichnet**, daß die erste und zweite Schwenkachse **(9, 13)** parallel zueinander in horizontaler Lage angeordnet sind.

4. Werkzeugschleifmaschine nach einem der Ansprüche 1 bis 3, **dadurch gekennzeichnet**, daß die zweite Schwenkachse **(9)** vertikal **(z)** und in den beiden horizontalen Richtungen **(x, y)** gesteuert verstellbar ist.

5. Werkzeugschleifmaschine nach einem der Ansprüche 1 bis 4, **dadurch gekennzeichent,** daß an der ersten Schwenkachse **(13)** ein durch sie verschwenkbarer Antrieb **(15)** für eine Schleifspindel **(17)**, an deren einem Spindelende, bevorzugt an jedem Spindelende, wenigstens eine Schleifscheibe **(19a, 19b, 21a, 21b)** angeordnet ist.

6. Werkzeugschleifmaschine nach Anspruch 5, insbesondere nach den Ansprüchen 3 und 5, **dadurch gekennzeichnet**, daß die Schleifspindel **(17)** senkrecht zu einer der beiden Schwenkachsen **(9, 13)**, bevorzugt senkrecht zur ersten Schwenkachse **(13)** angeordnet ist, wodurch jede Schleifscheibe **(19a, 19b, 21a, 21b)** in eine günstige Lage nahe der zweiten Schwenkachse **(9)** gebracht werden kann.

7. Werkzeugschleifmaschine nach einem der Ansprüche 1 bis 6, **gekennzeichnet durch** jeweils einen Kühlmittelauslaß **(23a - 23d)** pro Schleifscheibe **(19a, 19b, 21a, 21b)**, wobei jeder Kühlmittelauslaß **(23a - 23d)** mit der ersten Schwenkachse **(13)** mitschwenkbar ausgebildet ist, und bevorzugt jeweils nur der Kühlmittelauslaß **(23a - 23d)** über ein Ventil aktivierbar ist, dessen zugeordnete Schleifscheibe **(19a, 19b, 21a, 21b)** im Einsatz ist.

8. Werkzeugschleifmaschine nach einem der Ansprüche 1 bis 7, **gekennzeichnet durch** eine Trennwand **(25)**, welche den nassen und staubigen Schleifraum **(27)** von einer elektrischen Verkabelung **(29)** für eine Bewegungssteuerung der Schwenkachsen **(9, 13)** und der Schleifspindel **(17)** trennt.
